# EUROPEAN PATENT SPECIFICATION

(11) **EP 1 771 312 B1**
(45) Date of publication and mention of the grant of the patent: **16.10.2013**
(21) Application number: 05752153.6
(22) Date of filing: 09.06.2005
(51) Int. Cl.: B60K 17/28, B60K 25/06, F02B 67/04

(54) **METHOD AND SYSTEM FOR ACHIEVING A SPECIFIC TRANSMISSION RATIO, AND BEARING HOUSING**
VERFAHREN UND SYSTEM ZUR ERZIELUNG EINES BESTIMMTEN ÜBERSETZUNGSVERHÄLTNISSES UND LAGERGEHÄUSE
PROCEDE ET SYSTEME PERMETTANT D'OBTENIR UN RAPPORT DE TRANSMISSION SPECIFIQUE ET BOITIER DE ROULEMENT

(30) Priority: 18.06.2004 SE 0401572
(43) Date of publication of application: 11.04.2007
(73) Proprietor: Scania CV AB (PUBL), 151 87 Södertälje (SE)
(72) Inventor: HAGBERG, Kenneth, 151 45 Södertälje (SE); NILSSON, Dag, 151 32 Södertälje (SE); NILSSON, Hilding, 155 93 Nykvarn (SE); SLAPAK, Dieter, 151 47 Södertälje (SE)
(86) International application number: PCT/SE2005/000871
(87) International publication number: WO 2005/123438

(56) References cited:
- SE-C2- 519 053
- US-A- 1 258 883
- US-A- 3 216 104

## Description

### TECHNICAL FIELD OF THE INVENTION

The present invention relates to a method and a system for effecting various gear ratios in a motor vehicle according to the preamble of the attached claims 1 and 2 respectively. The present invention also relates to a bearing bracket according to the preamble of the attached claim 3.

### STATE OF THE ART

Vehicles are provided with auxiliary equipment of various kinds, e.g. pumps and compressors, which are often driven by means of a power take-off which receives driving power from the vehicle's driveline, usually via a transmission element in the vehicle's gearbox.

Such a power take-off is known from Swedish patent SE 519 053 and comprises a motion-transmitting gearwheel fitted in a bearing bracket in engagement with a forward gearwheel on the countershaft of the gearbox, and a connection means which makes it possible to connect auxiliary equipment which is intended to be driven by the power take-off, e.g. via a hydraulic pump or a mechanical link. The forward gearwheel on the gearbox countershaft also cooperates via an intermediate gearwheel with a pinion on the input shaft of the gearbox, thereby effecting motion transmission from the pinion to the gearwheel in the bearing bracket. The bearing bracket is attached firmly to a sidewall of the gearbox, while said connection means is fastened to a rear wall of the gearbox. A shaft situated in the power take-off and running between the gearwheel in the bearing bracket and said connection means makes transmission of driving motion possible between them. The power take-off shaft comprises a first and a second portion which may be placed at various angles relative to hub of the gearwheel in the bearing bracket and the connection unit respectively. This makes it possible in the bearing bracket to use gearwheels of varying size and number of teeth in order to effect different speeds of the power take-off shaft, a higher speed being achieved by using a smaller gearwheel and vice versa.

Auxiliary equipment driven via the power take-off usually requires a specific speed for the power take-off and hence a given transmission ratio between the power take-off shaft and the gearbox input shaft. The transmission ratio depends on the mutual relationship between the number of teeth of the pinion and of the gearwheel in the bearing bracket respectively, which at present entails effecting a specific transmission ratio by selecting a gearwheel in the bearing bracket on the basis of the number of teeth of the gearwheel concerned and of the pinion. It would however be desirable to provide a simpler way of selecting a gearwheel in the bearing bracket.

A further problem associated with the power take-off described above is that using different sizes of gearwheel in the bearing bracket to effect different transmission ratios requires bearing brackets of different dimensions, leading inter alia to high manufacturing costs.

US3216104 describes a method of assembling a power take off on an engine output axle. A drive gear on the engine output axle is connected to a driven gear for the power take off via an idler gear.

### OBJECTS OF THE INVENTION

A first object of the present invention is to provide a method and a system which make it easy to effect a specific transmission ratio in a motor vehicle between a first shaft in a gearbox and a shaft of a power take-off.

A second object of the present invention is that effecting various specific transmission ratios should be possible using one and the same bearing bracket.

### SUMMARY OF THE INVENTION

These objects are achieved with a method according to claim 1, a system according to claim 2 and a bearing bracket according to claim 3.

Claim 1 describes a method for effecting various transmission ratios in a motor vehicle between a first shaft of a gearbox and a shaft of a power take-off, whereby rotary motion is transmitted from a first motion-transmitting element on the first shaft to a motion-transmitting element on the power take-off shaft via a second motion-transmitting element situated between them which forms part of the gearbox and is mounted on a second shaft. The method is characterised by the step of the motion-transmitting element on the power take-off shaft being selected with a diameter having a predetermined first between-centres distance from the second motion-transmitting element which distance has a ratio to a second between-centres distance between the first and second motion-transmitting elements which ratio effects the various transmission ratios. The motion-transmitting element on the power take-off shaft is fitted for rotation in a bearing bracket which is fastened to a sidewall of the gearbox, and that at least one spacing element is fitted between a flange of the bearing bracket and the sidewall in order to provide a predetermined first between-centres distance for effecting one of the various specific transmission ratios.

The fact that the motion-transmitting element in the bearing bracket is selected on the basis of the between-centres distance between said motion-transmitting element and the motion-transmitting element in the gearbox obviates any dependence on the number of teeth of the pinion and of the motion-transmitting element in the bearing bracket. The method for effecting the specific transmission ratio will thus be easier than the state of the art.

It is advantageous if the motion-transmitting element on the power take-off shaft is fitted for rotation in a bearing bracket which is fastened to a sidewall of the gearbox and if at least one spacing element is fitted between a flange of the bearing bracket and the sidewall in order to provide the predetermined between-centres distance thereby effecting one of the various specific transmission ratios. This makes it possible to use bearing brackets with standardised dimensions, thereby reducing manufacturing costs.

Claim 2 describes a system for effecting a specific transmission ratio in a motor vehicle between a first shaft of a gearbox and a third shaft of a power take-off, whereby rotary motion is transmitted from a first motion-transmitting element on the first shaft to a motion-transmitting element on the power take-off shaft via a second motion-transmitting element situated between them which forms part of the gearbox and is mounted on a second shaft. The system is characterised in that the motion-transmitting element on the power take-off shaft has a diameter having a predetermined first between-centres distance from the second motion-transmitting element which distance has a ratio to a second between-centres distance between the first and second motion-transmitting elements, said ratio effecting the various specific transmission ratios. The motion-transmitting element on the power take-off shaft is fitted for rotation in a bearing bracket which is fastened to a sidewall of the gearbox, and that at least one spacing element is fitted between a flange of the bearing bracket and the sidewall in order to provide a predetermined first between-centres distance for effecting one of the various specific transmission ratios.

The system according to claim 2 affords the same advantages as the method according to claim 1.

Likewise for the method described above, it is advantageous if the motion-transmitting element on the power take-off shaft is fitted for rotation in a bearing bracket which is fastened to a sidewall of the gearbox and if at least one spacing element is fitted between a flange of the bearing bracket and the sidewall in order to provide the predetermined between-centres distance.

Claim 3 describes a bearing bracket in a power take-off of an engine-powered vehicle comprising a housing intended to at least partly house a motion-transmitting element intended to engage with a motion-transmitting element in a gearbox, a flange which runs round the housing and is provided with apertures for fastening means for fastening the bearing bracket to said gearbox, and carrier means situated on opposite sides of the bearing bracket, each of said means being provided with a hole running through it to cater for rotation of a shaft on which the motion-transmitting element is mounted. The bearing bracket is characterised by at least one spacing element intended to be situated between the flange and the gearbox in order to provide the predetermined between-centres distance between the motion-transmitting element in the bearing bracket and the motion-transmitting element in the gearbox, thereby effecting one of various transmission ratios between the first and second transmitting elements.

It thus becomes possible to provide the previously described between-centres distance between the motion-transmitting element in the bearing bracket and the second motion-transmitting element in the gearbox by using bearing brackets with standardised dimensions, thereby reducing manufacturing costs.

It is advantageous if the spacing element takes the form of a single part, since a smaller number of parts simplifies the fitting of the spacing element.

It is also advantageous if the spacing element is annular, thereby providing a good fit with the bearing bracket.

Finally, it is advantageous if the spacing element is provided with holes for accommodating fastening means, thereby achieving fixing of the spacing element relative to the bearing bracket and the gearbox.

### BRIEF DESCRIPTION OF THE DRAWINGS

The present invention is described below in more detail with reference to the attached drawings, in which:
Figure 1 depicts schematically a power take-off fastened to a sidewall of a gearbox;
Figure 2 depicts schematically how motion-transmitting elements in the gearbox and the power take-off cooperate;
Figure 3 depicts a perspective view of a bearing bracket according to the present invention;
Figure 4 shows how the bearing bracket according to Fig. 3 is fastened to the gearbox; and
Figure 5 depicts a view from above of a spacing element according to the present invention.

### DESCRIPTION OF EMBODIMENTS

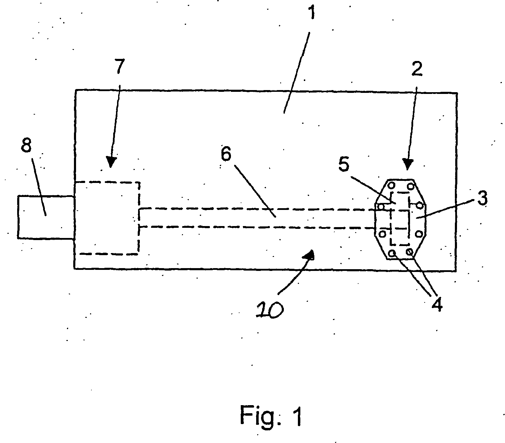

Figure 1 depicts schematically a power take-off 10 fastened to a gearbox 1 which forms part of a driveline of a motor vehicle, which power take-off 10 is thus driven by the vehicle's engine. The power take-off 10 comprises a first unit 2 itself comprising a bearing bracket 3 which is fastened by fastening means 4, e.g. bolts, to a sidewall of the gearbox 1. The bearing bracket 3 houses a motion-transmitting element in the form of a gearwheel 5 which is in engagement with a gearwheel (not depicted) in the gearbox 1. The power take-off 10 also comprises a power take-off shaft 6 which runs from the first unit 2 to a second unit 7 for transmission of rotary motion. The second unit 7 of the power take-off 10 is fastened to a rear wall of the gearbox 1 and comprises connection means for linking, for example, a hydraulic motor 8 to the power take-off 10 in order to operate auxiliary equipment of the vehicle.

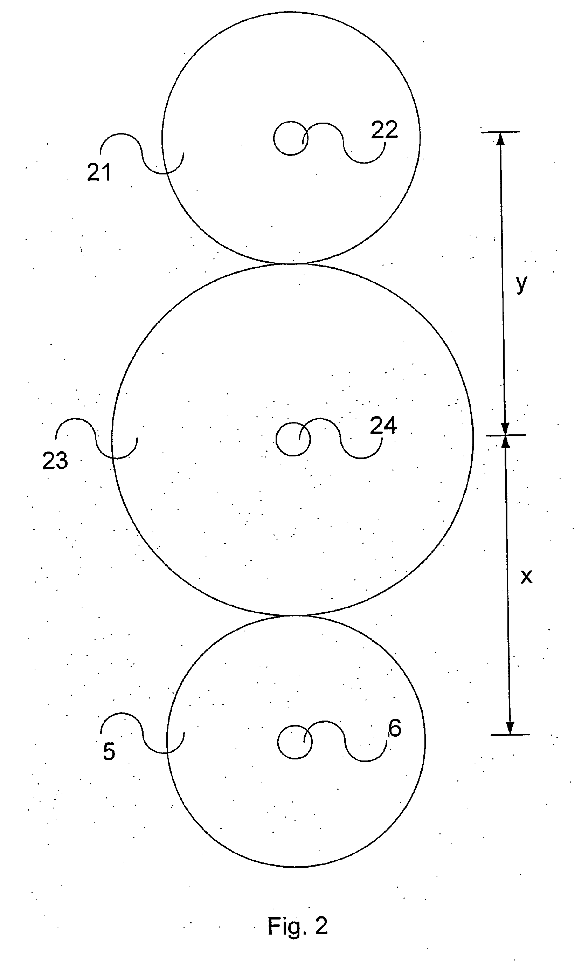

Figure 2 shows schematically how transmission of rotary motion from a first shaft 22 situated in the gearbox 1 to the power take-off shaft 6 is effected. As may be seen, a first motion-transmitting element mounted on the first shaft 22 and taking the form of a first gearwheel 21, e.g. a pinion on the gearbox input shaft, engages with a second motion-transmitting element in the form of a second gearwheel 23 on a second shaft 24, here an intermediate gear on the countershaft of the gearbox. The second gearwheel 23 also engages with the gearwheel 5 in the bearing bracket (not depicted in Figure 2), thereby making transmission of rotary motion possible from the input shaft 22 to the power take-off shaft 6. Figure 2 also shows two distances x and y, hereinafter referred to as the first and second between-centres distances, the first between-centres distance x denoting the shortest distance between geometrical centres of the second gearwheel 23 and of the gearwheel 5 in the bearing bracket, while the second between-centres distance y denotes the shortest distance between geometrical centres of the first and second gearwheels 21, 23 respectively. It should be noted that although the gearwheels 5, 21 and 23 in Figure 2 are situated along a straight line, they may in an alternative embodiment be at an angle of suitable magnitude.

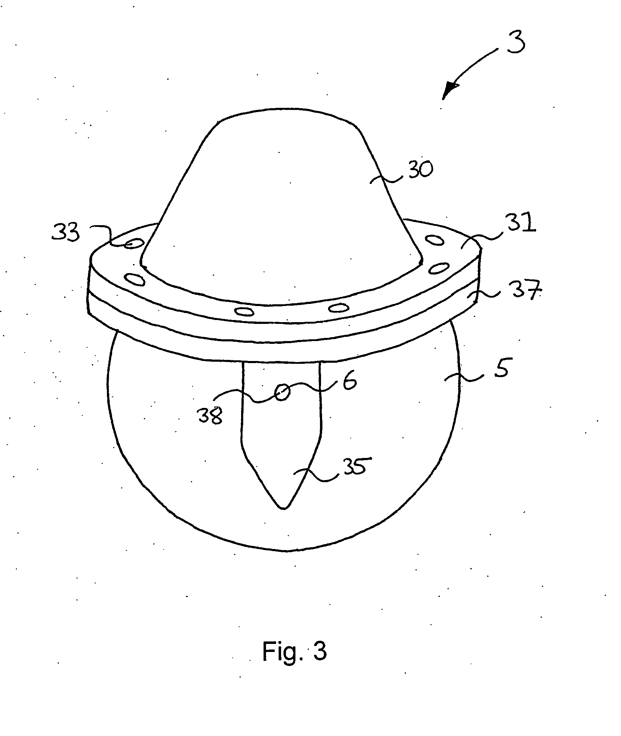

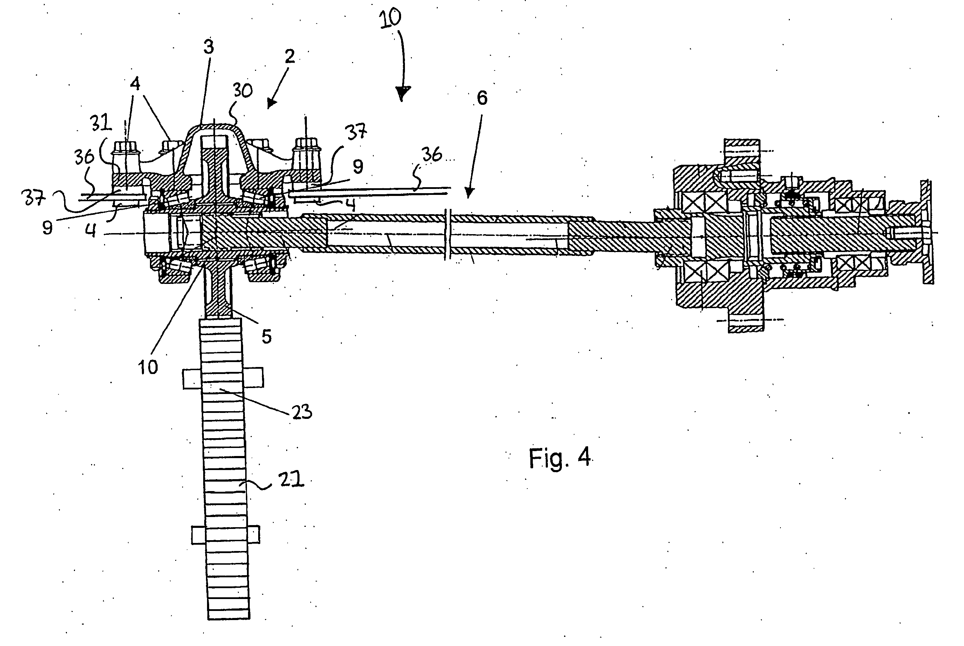

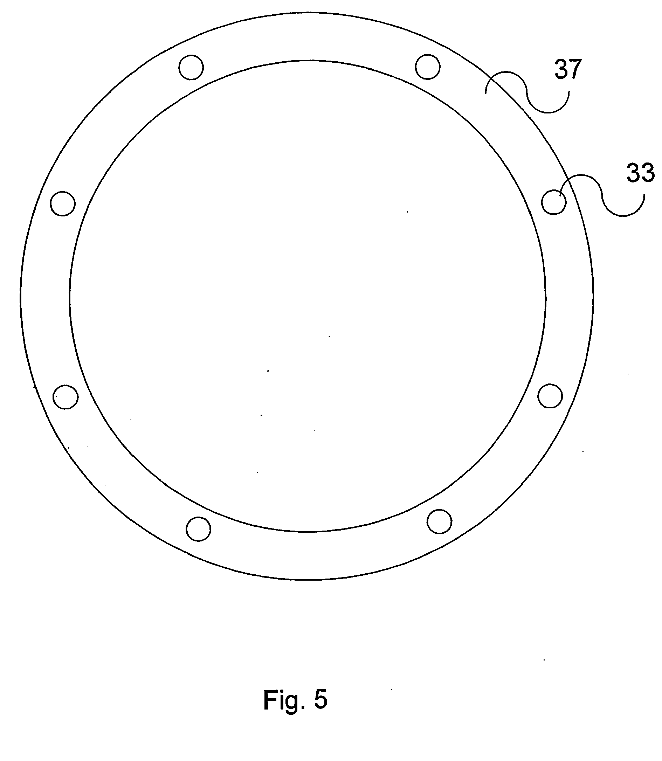

Figures 3 and 4 depict views of the bearing bracket 3 in Figure 1 showing the bearing bracket 3 comprising a housing 30 which at least partly houses the gearwheel 5 and has an annular flange 31 running round it. The flange 31 is provided with apertures 33 for introducing the aforesaid bolts 4 for fastening the bearing bracket 3 to a sidewall 36 of the gearbox 1. The flange 31 has protruding from it and substantially perpendicular to it two elongate carrier means 35 situated on opposite sides of the bearing bracket, each of said means being provided with a hole 38 running through it to cater for a shaft 6 rotating via bearings 9. As may be seen in Figures 3 and 4, an annular spacing element 37 is fitted between the flange 31 and the sidewall 36 of the gearbox 1, which spacing element is described in more detail below with reference to Figure 5. The spacing element 37 keeps the bearing bracket 3 away from the sidewall 36 of the gearbox 1 and hence increases the between-centres distance between the gearwheel 5 in the bearing bracket 3 and the second gearwheel 23, without the dimensions of the bearing bracket 3 itself having to be altered. It thus becomes possible in one or the same bearing bracket to effect various transmission ratios by fitting wheels of different dimensions at different between-centres distances from the second gearwheel, thereby making it possible to reduce the number of standard sizes of bearing brackets and hence reduce manufacturing costs.

The design of the gearwheel 5 and its interaction with the shaft 6 and the second unit 7 are dealt with in more detail in SE 519 053 and will not be described here.

Figure 5 depicts an annular spacing element 37 according to the present invention, in the form of a single piece of a material with the necessary strength, e.g. aluminium or steel. As may be seen in the drawing, the spacing element 37 is provided with holes 39 to accommodate the aforesaid bolts for fixing the spacing element 37 between the bearing bracket 3 and the sidewall 36 of the gearbox 1. It should be noted that these holes 39 are not necessary for every kind of spacing element, e.g. it is possible to conceive of non-annular smaller spacing elements applied between the bolts 4 which connect the bearing bracket 3 to the gearbox 1. It is also clear that more than one spacing element 37, or none, depending on the dimensions of the bearing bracket 3, may be used in providing the desired first between-centres distance x.

As mentioned above, the basis for selecting a gearwheel 5 in the bearing bracket 3 in order to effect a specific transmission ratio between the first shaft 22 and the power take-off shaft 6 is at present the ratio between the number of teeth of the first gearwheel 21 and of the gearwheel 5 in the bearing bracket 3. It has been found, however, that the smaller the difference between the first and second between-centres distances x and y (see Figure 2), the closer one comes to a constant transmission ratio irrespective of the relationship between the number of teeth of the gearwheels 5, 21 and 23 involved in the transmission of motion. As first and second between-centres distances x and y which are the same result in a transmission ratio of 1:1, it follows from the foregoing that when selecting a gearwheel 5 in the bearing bracket 3 in order to effect a transmission ratio close to 1:1, it is substantially possible to disregard the number of teeth of the gearwheels 5, 21 and 23. Instead, it is advantageous to select a gearwheel 5 in the bearing bracket 3 such that its dimensions result in a first between-centres distance x relative to the second gearwheel 23 in the gearbox 1 which is in a predetermined ratio with the second between-centres distance y corresponding approximately to the desired transmission ratio. As the between-centres distances x and y are easy to measure when fitting the bearing bracket 3, the result is an easy way of effecting a specific transmission ratio.

It will be obvious to specialists that the method described above for gearwheel selection is not limited to the power take-off described above but may be applied in all contexts in which three gearwheels are used for transmission of rotary motion from a first shaft in a gearbox via a second shaft to a power take-off shaft in a power take-off. This may involve the gearwheel in the bearing bracket cooperating with any desired gear of the gearbox. A bearing bracket according to the present invention may be used in the same way in various different types of power take-off differing from that described above.

## Claims

1. A method for effecting various specific transmission ratios in a motor vehicle between a first shaft (22) of a gearbox (1) and a shaft (6) of a power take-off (10), whereby rotary motion is transmitted from a first motion-transmitting element (21) on the first shaft (22) to a motion-transmitting element (5) on the power take-off shaft (6) via a second motion-transmitting element (23) situated between them which forms part of the gearbox (1) and is mounted on a second shaft (24), **characterised by** the step of the motion-transmitting element (5) on the power take-off shaft (6) being selected with a diameter having a predetermined first between-centres distance (x) from the second motion-transmitting element (23) which distance (x) having a ratio to a second between-centres distance (y) between the first and second motion-transmitting elements (21, 23), said ratio effecting the various specific transmission ratios wherein the motion-transmitting element (5) on the power take-off shaft (6) is fitted for rotation in a bearing bracket (3) which is fastened to a sidewall (36) of the gearbox (1), and that at least one spacing element (37) is fitted between a flange (31) of the bearing bracket (3) and the sidewall (36) in order to provide a predetermined first between-centres distance (x) for effecting one of the various specific transmission ratios.

2. A system for effecting various specific transmission ratios in a motor vehicle between a first shaft (22) of a gearbox (1) and a third shaft (6) of a power take-off, whereby rotary motion is transmitted from a first motion-transmitting element (21) on the first shaft (22) to a motion-transmitting element (5) on the power take-off shaft (6) via a second motion-transmitting element (23) situated between them which forms part of the gearbox (1) and is mounted on a second shaft (24), **characterised in that** the motion-transmitting element (5) on the power take-off shaft (6) has a diameter having a predetermined first between-centres distance (x) from the second motion-transmitting element (23) which distance (x) having a ratio to a second between-centres distance (y) between the first and second motion-transmitting elements (21, 23)), said ratio effecting the various specific transmission ratios wherein the motion-transmitting element (5) on the power take-off shaft (6) is fitted for rotation in a bearing bracket (3) which is fastened to a sidewall (36) of the gearbox (1), and that at least one spacing element (37) is fitted between a flange (31) of the bearing bracket (3) and the sidewall (36) in order to provide a predetermined first between-centres distance (x) for effecting one of the various specific transmission ratios.

3. A bearing arrangement comprising at least one spacing element (37) and a bearing bracket (3) in a power take-off of an engine-driven vehicle comprising a housing (30) intended to at least partly house a first motion-transmitting element (5) which is itself intended to engage with a second motion-transmitting element (23) in a gearbox (1), a flange (31) which runs round the housing (30) and is provided with apertures (33) for fastening means (4) for fastening the bearing bracket (3) to said gearbox (1), and carrier means (35) which protrude from the flange (31), are situated on opposite sides of the bearing bracket (3), each of said means being provided with a hole (38) running through it to cater for rotation of a shaft (6) on which the motion-transmitting element (5) is mounted, **characterised in that** the at least one-spacing element (37) is intended to be situated between the flange (31) and the gearbox (1) in order to provide a predetermined first between-centres distance between the motion-transmitting element (5) in the bearing bracket (3) and the second motion-transmitting element (23) in the gearbox, thereby effecting one of various transmission ratios between the first and second transmitting elements (5, 22).

4. A bearing arrangement (3) according to claim 3, **characterised in that** the spacing element (37) takes the form of a single part.

5. A bearing arrangement (3) according to claim 4, **characterised in that** the spacing element (37) is annular.

6. A bearing arrangement (3) according to any one of claims 3 - 5, **characterised in that** the spacing element (37) is provided with holes (39) to accommodate said fastening means (4).

## Patentansprüche

1. Verfahren zum Bewirken diverser bestimmter Übersetzungsverhältnisse in einem Kraftfahrzeug zwischen einer ersten Welle (22) eines Getriebes (1) und einer Welle (6) eines Nebenantriebs (10), wobei eine Drehbewegung von einem ersten bewegungsübertragenden Bauteil (21) an der ersten Welle (22) auf ein bewegungsübertragendes Bauteil (5) an der Nebenantriebswelle (6) über ein zwischen ihnen befindliches zweites bewegungsübertragendes Bauteil (23) übertragen wird, das dem Getriebe (1) zugehörig ist und an einer zweiten Welle (24) befestigt ist,
**gekennzeichnet durch** den Schritt, dass das bewegungsübertragende Bauteil (5) an der Nebenantriebswelle (6) mit einem Durchmesser gewählt wird, der einen vorbestimmten ersten Zwischenmittenabstand (x) gegenüber dem zweiten bewegungsübertragenden Element (23) aufweist, wobei der Abstand (x) in einem Verhältnis zu einem zweiten Zwischenmittenabstand (y) zwischen dem ersten und zweiten bewegungsübertragenden Bauteil (21, 23) steht und das Verhältnis die diversen bestimmten Übersetzungsverhältnisse bewirkt, wobei das bewegungsübertragende Bauteil (5) an der Nebenantriebswelle (6) zur Rotation in einem Lagerbock (3) eingepasst ist, der an einer Seitenwand (36) des Getriebes (1) befestigt ist, und dass zumindest ein Abstandselement (37) zwischen einem Flansch (31) des Lagerbocks (3) und der Seitenwand (36) eingepasst ist, um einen vorbestimmten ersten Zwischenmittenabstand (x) zum Bewirken eines der diversen bestimmten Übersetzungsverhältnisse bereitzustellen.

2. System zum Bewirken diverser bestimmter Übersetzungsverhältnisse in einem Kraftfahrzeug zwischen einer ersten Welle (22) eines Getriebes (1) und einer dritten Welle (6) eines Nebenantriebs, wobei eine Drehbewegung von einem ersten bewegungsübertragenden Bauteil (21) an der ersten Welle (22) auf ein bewegungsübertragendes Bauteil (5) an der Nebenantriebswelle (6) über ein zwischen ihnen befindliches zweites bewegungsübertragendes Bauteil (23) übertragen wird, das dem Getriebe (1) zugehörig ist und an einer zweiten Welle (24) befestigt ist,
**dadurch gekennzeichnet, dass** das bewegungsübertragende Bauteil (5) an der Nebenantriebswelle (6) einen Durchmesser aufweist, der einen vorbestimmten ersten Zwischenmittenabstand (x) gegenüber dem zweiten bewegungsübertragenden Element (23) aufweist, wobei der Abstand (x) in einem Verhältnis zu einem zweiten Zwischenmittenabstand (y) zwischen dem ersten und zweiten bewegungsübertragenden Bauteil (21, 23) steht und das Verhältnis die diversen bestimmten Übersetzungsverhältnisse bewirkt, wobei das bewegungsübertragende Bauteil (5) an der Nebenantriebswelle (6) zur Rotation in einem Lagerbock (3) eingepasst ist, der an einer Seitenwand (36) des Getriebes (1) befestigt ist, und dass zumindest ein Abstandselement (37) zwischen einem Flansch (31) des Lagerbocks (3) und der Seitenwand (36) eingepasst ist, um einen vorbestimmten ersten Zwischenmittenabstand (x) zum Bewirken eines der diversen bestimmten Übersetzungsverhältnisse bereitzustellen.

3. Lageranordnung, umfassend zumindest ein Abstandselement (37) und einen Lagerbock (3) in einem Nebenantrieb eines motorbetriebenen Fahrzeugs, umfassend ein Gehäuse (30), das dazu vorgesehen ist, ein erstes bewegungsübertragendes Bauteil (5) zumindest teilweise aufzunehmen, welches wiederum dazu vorgesehen ist, in ein zweites bewegungsübertragendes Bauteil (23) in einem Getriebe (1) einzugreifen, einen Flansch (31), der sich um das Gehäuse (30) herum erstreckt und an dem Öffnungen (33) für Befestigungsmittel (4) zum Befestigen des Lagerbocks (3) an dem Getriebe (1) vorgesehen sind, und Trägermittel (35), die sich von dem Flansch (31) weg erstrecken und sich auf entgegengesetzten Seiten des Lagerbocks (3) befinden, wobei jedes der Mittel mit einem Loch (38) versehen ist, das es durchsetzt, um eine Rotation der Welle (6), auf der das bewegungsübertragende Bauteil (5) befestigt ist, zu sicherzustellen,
**dadurch gekennzeichnet, dass** es vorgesehen ist, dass sich das zumindest eine Abstandselement (37) zwischen dem Flansch (31) und dem Getriebe (1) befindet, um einen vorbestimmten ersten Zwischenmittenabstand zwischen dem bewegungsübertragenden Bauteil (5) in dem Lagerbock (3) und dem zweiten bewegungsübertragenden Bauteil (23) in dem Getriebe bereitzustellen und dabei eines von diversen Übersetzungsverhältnissen zwischen dem ersten und zweiten Übersetzungselement (5, 22) zu bewirken.

4. Lageranordnung (3) nach Anspruch 3,
**dadurch gekennzeichnet, dass** das Abstandselement (37) als Einzelteil ausgestaltet ist.

5. Lageranordnung (3) nach Anspruch 4,
**dadurch gekennzeichnet, dass** das Abstandselement (37) ringförmig ist.

6. Lageranordnung (3) nach einem der Ansprüche 3 bis 5,
**dadurch gekennzeichnet, dass** das Abstandselement (37) mit Löchern (39) versehen ist, um die Befestigungsmittel (4) aufzunehmen.

## Revendications

1. Procédé pour établir différents rapports de transmission spécifiques dans un véhicule à moteur entre un premier arbre (22) appartenant à une boîte de vitesses (1) et un arbre (6) appartenant à une prise de force (10), moyennant lequel un mouvement de rotation est transmis d'un premier élément de transmission de mouvement (21) monté sur le premier arbre (22) à un élément de transmission de mouvement (5) monté sur l'arbre de la prise de force (6), par l'intermédiaire d'un deuxième élément de transmission de mouvement (23) situé entre eux, qui fait partie de la boîte de vitesses (1) et qui est monté sur un deuxième arbre (24), **caractérisé par** l'étape consistant en ce que l'élément de transmission de mouvement (5) monté sur l'arbre de la prise de force (6) est choisi à un diamètre qui le place à une première distance entre centres prédéterminée (x) du deuxième élément de transmission de mouvement (23), cette distance (x) étant dans un certain rapport à une deuxième distance entre centres (y) des premier et deuxième éléments de transmission de mouvement (21, 23), ledit rapport établissant les différents rapports de transmission spécifiques, l'élément de transmission de mouvement (5) monté sur l'arbre de la prise de force (6) étant monté rotatif dans un support de palier (3) qui est fixé à une paroi latérale (36) de la boîte de vitesses (1), et en ce qu'au moins un élément entretoise (37) est monté entre une bride (31) du support de palier (3) et la paroi latérale (36) afin de maintenir une première distance entre centres prédéterminée (x) pour établir l'un des différents rapports de transmission spécifiques.

2. Système pour établir différents rapports de transmission spécifiques dans un véhicule à moteur entre un premier arbre (22) appartenant à une boîte de vitesses (1) et un troisième arbre (6) appartenant à une prise de force, dans lequel un mouvement de rotation est transmis d'un premier élément de transmission de mouvement (21) monté sur le premier arbre (22) à un élément de transmission de mouvement (5) monté sur l'arbre de la prise de force (6) par l'intermédiaire d'un deuxième élément de transmission de mouvement (23) situé entre eux, qui fait partie de la boîte de vitesses (1) et qui est monté sur un deuxième arbre (24), **caractérisé en ce que** l'élément de transmission de mouvement (5) monté sur l'arbre (6) de la prise de force a un diamètre qui le place à une première distance entre centres prédéterminée (x) du deuxième élément de transmission de mouvement (23), cette distance (x) étant dans un rapport à une deuxième distance entre centres (y) entre les premier et deuxième éléments de transmission de mouvement (21, 23), ledit rapport établissant les différents rapports de transmission spécifiques, l'élément de transmission de mouvement (5) monté sur l'arbre de la prise de force (6) étant monté rotatif dans un support de palier (3) qui est fixé à une paroi latérale (36) de la boîte de vitesses (1), et **en ce qu'**au moins un élément entretoise (37) est monté entre une bride (31) du support de palier (3) et la paroi latérale (36) afin de maintenir une première distance entre centres prédéterminée (x) pour établir l'un des différents rapports de transmission spécifiques.

3. Structure de palier comprenant au moins un élément entretoise (37) et un support de palier (3) dans une prise de force d'un véhicule à moteur, comprenant un boîtier (30) destiné à contenir au moins partiellement un premier élément de transmission de mouvement (5) qui est lui-même destiné à entrer en prise avec un deuxième élément de transmission de mouvement (23) monté dans une boîte de vitesses (1), une bride (31) qui s'étend sur le pourtour du boîtier (30) et est munie d'ouvertures (33) prévues pour des moyens de fixation (4) servant à fixer le support de palier (3) à ladite boîte de vitesses (1), et des moyens supports (35) qui font saillie sur la bride (31) et sont situés sur des côtés opposés du support de palier (3), chacun desdits moyens étant muni d'un trou (38) qui le traverse pour permettre la rotation d'un arbre (6) sur lequel l'élément de transmission de mouvement (5) est monté, **caractérisée en ce que** ledit élément entretoise (37), au moins au nombre de un, est destiné à être situé entre la bride (31) et la boîte de vitesses (1) pour maintenir une première distance entre centres prédéterminée entre l'élément de transmission de mouvement (5) situé dans le support de palier (3) et le deuxième élément de transmission de mouvement (23) situé dans la boîte de vitesses, en établissant par ce moyen l'un des différents rapports de transmission entre les premier et deuxième éléments de transmission (5, 22).

4. Structure de palier (3) selon la revendication 3, **caractérisée en ce que** l'élément entretoise (37) se présente sous la forme d'une seule pièce.

5. Structure de palier (3) selon la revendication 4, **caractérisée en ce que** l'élément entretoise (37) est annulaire.

6. Structure de palier (3) selon l'une quelconque des revendications 3 à 5, **caractérisée en ce que** l'élément entretoise (37) est muni de trous (39) destinés à recevoir lesdits moyens de fixation (4).
